# EUROPEAN PATENT APPLICATION

(11) **EP 3 293 642 A1**
(43) Date of publication of application: **14.03.2018**
(21) Application number: 16789274.4
(22) Date of filing: 21.04.2016
(51) Int. Cl.: G06F 17/30

(54) **METHOD AND APPARATUS FOR RECORDING AND RESTORING CLICK POSITION IN PAGE**

(30) Priority: 05.05.2015 CN 201510224908
(71) Applicant: Alibaba Group Holding Limited, Grand Cayman (KY)
(72) Inventor: TIAN, Liang, Hangzhou 310099 (CN)
(74) Representative: Kunz, Herbert
(86) International application number: PCT/CN2016/079813
(87) International publication number: WO 2016/177280

(57) **Abstract**

The present application discloses a method and an apparatus for recording and restoring a click position in a webpage, to solve the problem in the prior art that recorded data of a click position of a user in a webpage is invalid and later data analysis is inaccurate. The recording method includes: determining a reference region in a webpage in which a click position is to be recorded; dividing the reference region into several operating regions according to a frame structure and a style of the webpage, and determining a region other than the reference region in the webpage as an operating region, wherein coordinate positions of webpage elements in the operating region are fixed in the operating region, and the operating region has at least one reference coordinate position; determining a current operating region where a click operation of a user is located; and by taking a reference coordinate position of the current operating region where the click operation is located as a reference, calculating relative coordinates of the position of the click operation with respect to the reference coordinate position, and recording the relative coordinates as a click position of the click operation in the webpage.

## Description

### Technical Field

The present application relates to the field of computer technologies, and in particular, to a method and an apparatus for recording and restoring a click position in a webpage.

### Background Art

As Internet technologies develop and Internet resources become increasingly abundant, a user can acquire more and more information from the Internet, and thus networks become an indispensable part of people's life. For providers of Internet services, in order to more effectively attract users' attention and provide better services for users, it is inevitably necessary to conduct statistics on and analyze network operation behaviors of users.

In terms of a webpage browsing behavior of a user, for example, a user's preference for a webpage typographic style can be obtained by recording the user's click behaviors for webpages having identical contents but different typographic designs, and a user's interest degrees for various types of information can be obtained by recording the user's click behaviors for different types of information in webpages. All these rely on accurate recording of click behavior data of a user in webpages, and only in this way can a reliable data basis be provided for analyzing user behaviors, optimizing user experience designs of a system and so on.

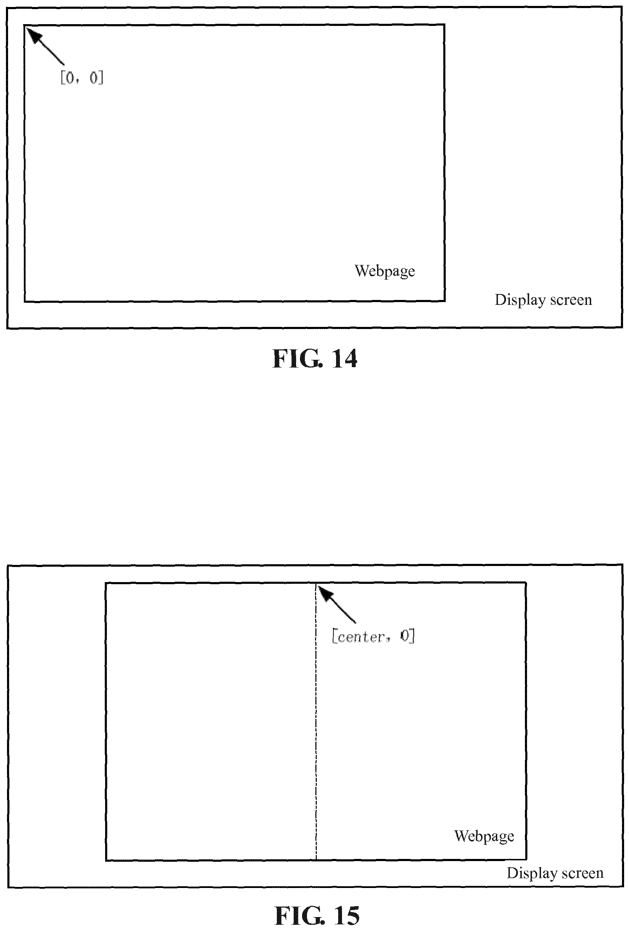

In the prior art, there are mainly two methods for recording a user's click behaviors in a webpage. Referring to FIG. 14, a first method is taking an upper left corner of a webpage as reference coordinates [0, 0], and this method is applied to a purely static webpage with a left alignment layout. Referring to FIG. 15, a second method is taking the top of a vertical central axis of a webpage as reference coordinates [center, 0], and this manner is applied to a purely static webpage with a centered layout. However, webpage contents and structures may change with different time, user identities, scenarios and so on, and a webpage used in later data analysis may be different from a webpage actually accessed by a user, thus leading to invalidity of recorded data and inaccuracy of later data analysis.

### Summary of the Invention

Embodiments of the present application provide a method and an apparatus for recording and restoring a click position in a webpage, to solve the problem in the prior art that recorded data of a click position of a user in a webpage is invalid and later data analysis is inaccurate.

The embodiments of the present application provide a method for recording a click position in a webpage, including:
determining a reference region in a webpage in which a click position is to be recorded;
dividing the reference region into several operating regions according to a frame structure and a style of the webpage, and determining a region other than the reference region in the webpage as an operating region, wherein coordinate positions of webpage elements in the operating region are fixed in the operating region, and the operating region has at least one reference coordinate position;
determining a current operating region where a click operation of a user is located; and
by taking a reference coordinate position of the current operating region where the click operation is located as a reference, calculating relative coordinates of the position of the click operation with respect to the reference coordinate position, and recording the relative coordinates as a click position of the click operation in the webpage.

The embodiments of the present application provide a method for restoring a click position in a webpage, the webpage being divided into several operating regions, wherein the method includes:
querying relative coordinates of a position of a click operation of a user with respect to a reference coordinate position of an operating region where the click operation of the user is located, the relative coordinates being obtained at a first moment according to the method for recording a click position in a webpage described above;
determining a position of the operating region in the webpage at a second moment, the second moment being after the first moment; and
restoring, at the second moment, a click position of the click operation in the webpage according to the relative coordinates of the position of the click operation of the user with respect to the reference coordinate position of the operating region where the click operation of the user is located at the first moment and the position of the operating region in the webpage at the second moment.

The embodiments of the present application provide an apparatus for recording a click position in a webpage, including:
a region determination module configured to determine a reference region in a webpage in which a click position is to be recorded;
a division module configured to divide the reference region into several operating regions according to a frame structure and a style of the webpage, and determine a region other than the reference region in the webpage as an operating region, wherein coordinate positions of webpage elements in the operating region are fixed in the operating region, and the operating region has at least one reference coordinate position;
a determination module configured to determine a current operating region where a click operation of a user is located; and
a processing module configured to, by taking a reference coordinate position of the current operating region where the click operation is located as a reference, calculate relative coordinates of the position of the click operation with respect to the reference coordinate position, and record the relative coordinates as a click position of the click operation in the webpage.

The embodiments of the present application provide an apparatus for restoring a click position in a webpage, the webpage being divided into several operating regions, wherein the apparatus includes:
a query module configured to query relative coordinates of a position of a click operation of a user with respect to a reference coordinate position of an operating region where the click operation of the user is located, the relative coordinates being obtained at a first moment according to the apparatus for recording a click position in a webpage described above;
a positioning module configured to determine a position of the operating region in the webpage at a second moment, the second moment being after the first moment; and
a calculation module configured to restore, at the second moment, a click position of the click operation in the webpage according to the relative coordinates of the position of the click operation of the user with respect to the reference coordinate position of the operating region where the click operation of the user is located at the first moment and the position of the operating region in the webpage at the second moment.

The embodiments of the present application provide a method and an apparatus for recording and restoring a click position in a webpage. In the recording method, a reference region in a webpage in which a click position is to be recorded is determined; the reference region is divided into several operating regions according to a frame structure and a style of the webpage, a region other than the reference region in the webpage is divided as one operating region, and at least one reference coordinate position is determined for each operating region. After a user performs a click operation in the webpage, a current operating region where the click operation is located may be determined, and then by taking a reference coordinate position of the current operating region as a reference, relative coordinates of the position of the click operation with respect to the reference coordinate position are calculated and taken as a click position of the click operation in the webpage. As each operating region has its own reference coordinate position, when some operating regions dynamically change, click position data of other operating regions would not be affected. For an operating region that dynamically changes, click position data therein still has a reference significance with respect to the operating region, thereby ensuring validity of recorded click position data and accuracy of later data analysis.

### Brief Description of the Drawings

The accompanying drawings described here are used to provide further understanding about the present application, and constitute a part of the present application. Schematic embodiments of the present application and descriptions thereof are used to explain the present application, but do not pose any improper limitations to the present application. In the accompanying drawings:
FIG. 1 is a schematic flowchart of recording a click position in a webpage according to an embodiment of the present application;
FIG. 2 is a schematic diagram of a scenario where a webpage is divided into operating regions according to an embodiment of the present application;
FIG. 3 is a schematic diagram of a scenario where a webpage is divided into operating regions according to another embodiment of the present application;
FIG. 4 shows a nested structure of DOM elements according to an embodiment of the present application;
FIG. 5 is a schematic diagram of a scenario where a click position of a click operation in a banner region of a webpage is recorded according to an embodiment of the present application;
FIG. 6 is a schematic flowchart of restoring a click position in a webpage according to an embodiment of the present application;
FIG. 7 is a schematic diagram of a scenario where a position of a banner region at a second moment floats with respect to a position thereof at a first moment in a process of restoring a click position in a webpage according to an embodiment of the present application;
FIG. 8 is a schematic flowchart showing that an area of an operating region changes at a second moment in a process of restoring a click position in a webpage according to an embodiment of the present application;
FIG. 9 is a schematic diagram of a scenario where an area of an operating region changes at a second moment in a process of restoring a click position in a webpage according to an embodiment of the present application;
FIG. 10 is a schematic flowchart in the case where an operating region does not exist at a second moment in a process of restoring a click position in a webpage according to an embodiment of the present application;
FIG. 11 is a schematic diagram of a scenario where an operating region does not exist at a second moment in a process of restoring a click position in a webpage according to an embodiment of the present application;
FIG. 12 is a schematic diagram of modules of an apparatus for recording a click position in a webpage according to an embodiment of the present application;
FIG. 13 is a schematic diagram of modules of an apparatus for restoring a click position in a webpage according to an embodiment of the present application;
FIG. 14 is a schematic diagram of a scenario where reference coordinates of a webpage is established in the prior art; and
FIG. 15 is a schematic diagram of another scenario where reference coordinates of a webpage is established in the prior art.

### Detailed Description

To make the objectives, technical solutions, and advantages of the present application clearer, the technical solutions of the present application will be clearly and completely described in the following with reference to specific embodiments of the present application and corresponding accompanying drawings. It is apparent that the embodiments described are merely some of rather than all of the embodiments of the present application. All other embodiments obtained by those of ordinary skill in the art based on the embodiments in the present application without making creative efforts all belong to the protection scope of the present application.

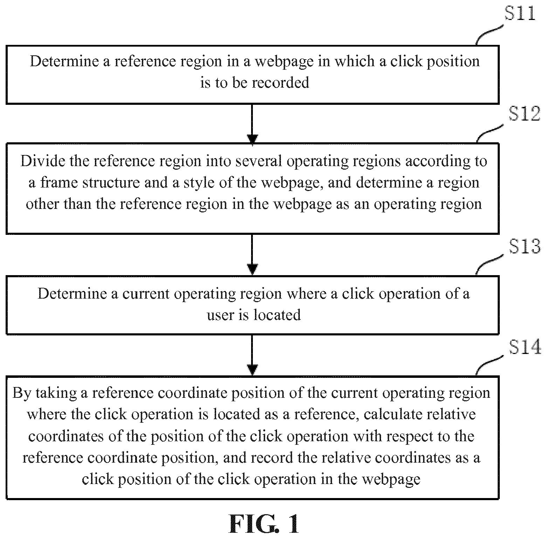

FIG. 1 shows a process of recording a click position in a webpage according to an embodiment of the present application, which specifically includes the following steps:
S11: A reference region in a webpage in which a click position is to be recorded is determined.

In a specific determination process, it is possible to conduct statistics on historical operation behaviors of the user in the webpage and determine a region in which the number of the historical operation behaviors of a user exceeds a preset threshold in the webpage as a reference region. That is, the reference region determined here essentially reflects that the user pays more attention to this region. Determining the reference region and further dividing the reference region through the following step can ensure accuracy of recording of the click position in the reference region.

S12: The reference region is divided into several operating regions according to a frame structure and a style of the webpage, and a region other than the reference region in the webpage is determined as an operating region.

In this embodiment, coordinate positions of webpage elements in the operating region are fixed in the operating region, that is, webpage elements in any operating region are static relative to the operating region where the webpage elements are located. The webpage elements described here may be text, images, links and the like in the webpage.

The operating region has at least one reference coordinate position. Exemplarily, the reference coordinate position may be an upper left corner of the corresponding operating region, or the top of a vertical central axis of the corresponding operating region, or the like. Each operating region may be provided with multiple different reference coordinate positions, to more precisely record a click position of a click operation of a user.

When the reference region is divided according to a frame structure and a style of the webpage, historical operation behaviors of the user in the reference region of the webpage may also be considered comprehensively. For example, an info region in the webpage may be determined as an independent region according to the frame structure and the style of the webpage, and in this case, it is known according to the historical operation behaviors of the user that obviously more attention is paid to the info region than surrounding regions. Then, when the reference region is divided into operating regions, the info region may be divided as an independent operating region. If it is found according to the historical operation behaviors of the user that the attention to the info region is approximate to the attention to an adjacent ads region, when the reference region is divided into operating regions, the two regions may be jointly determined as one operating region.

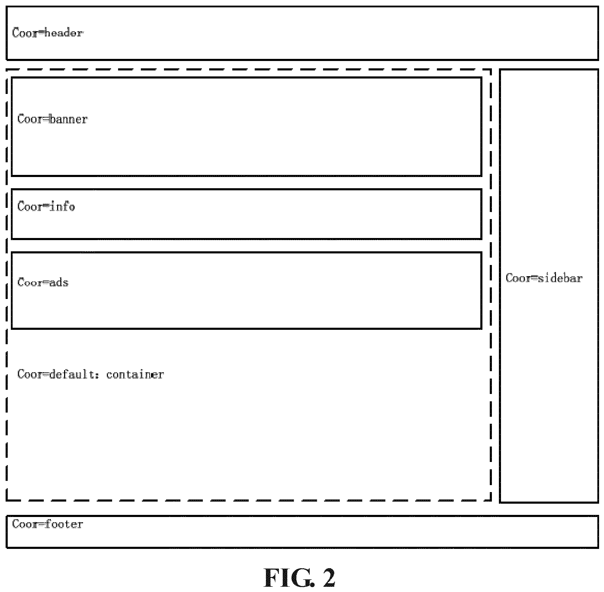

Referring to FIG. 2, the several operation regions into which the reference region is divided may include, for example, a header region, and/or a banner region, and/or an info region, and/or an ads region, and/or a footer region, and/or a sidebar region.

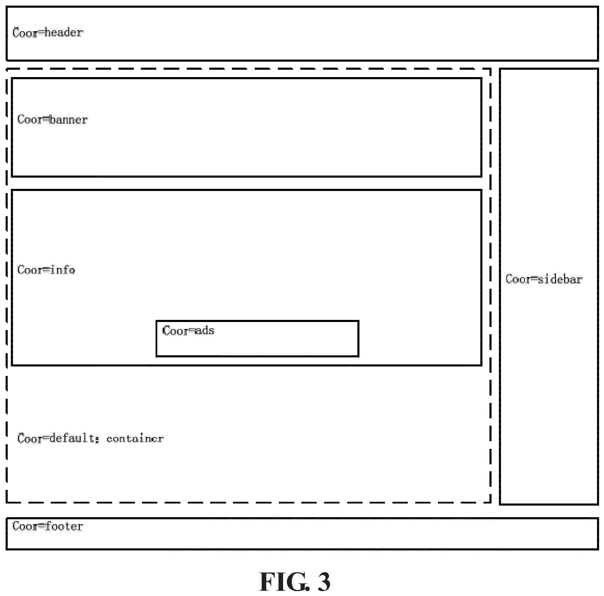

Referring to FIG. 3, the several operating regions into which the reference region is divided may further include a nest case shown here: an ads region is nested in an info region. A range or boundary of each operating region may be determined according to the frame structure and the style of the webpage.

Continuously referring to FIG. 2, all regions default: container other than the reference region in the webpage are determined as one separate operating region. Moreover, the reference coordinate position of the operating region is selected from any reference coordinate position in the several operating regions into which the reference region is divided. Generally, some "invalid" regions (relatively, the reference region may be regarded as a valid region here) exist in the webpage, for example, blank regions between block elements, between inline elements, and between a block element and an inline element, blank regions on two sides of a webpage with a centered layout, and the like. Click position data of the user in these regions usually do not have a relatively high reference significance. Determining these regions as one operating region and sharing a reference coordinate position of one valid reference region may greatly increase determinability of click coordinates of these regions.

S13: A current operating region where a click operation of a user is located is determined.

After the user performs a click operation in the webpage, the browser can obtain a DOM element (nestable) corresponding to the click operation of the user. As the operating regions in the webpage are all marked on the DOM element, a mark of an operating region can be searched for by layer-by-layer upward recursion. Once the mark of the operating region is found, it may be considered that the click operation of the user is located in the corresponding operating region. Definitely, it may be understood that in an alternative embodiment, after finding the mark of the operating region, the browser may also send information of the mark to a server, so that the server determines the operating region corresponding to the click operation of the user.

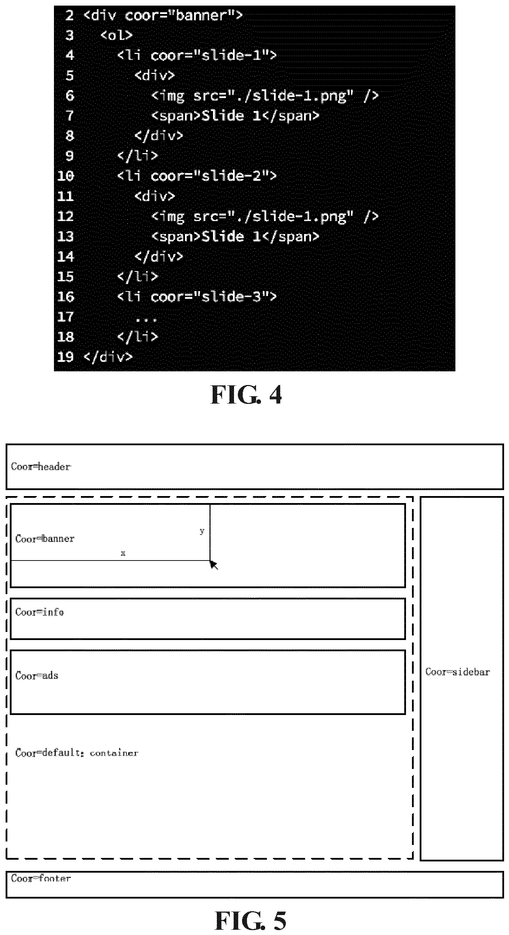

Referring to FIG. 4, in the illustrated DOM nested structure, supposing that the user clicks text of "Slide1", at this point, the server may search upward along the DOM nested structure: span -> div -> li[coor="slide-1"]. In this case, the server may take an operating region included in the li[coor="slide-1"] node as the operating region where the click of the user is located.

S14: By taking a reference coordinate position of the current operating region where the click operation is located as a reference, relative coordinates of the position of the click operation with respect to the reference coordinate position are calculated, and the relative coordinates are recorded as a click position of the click operation in the webpage.

Referring to FIG. 5, the above example is continuously used, and if it is judged at this point that the click operation of the user is in the banner region, the upper left corner of the banner region is taken as a reference coordinate position [0, 0], and the relative coordinates of the position of the click operation with respect to the reference coordinate position are recorded as banner: [x, y]. The calculation process here may be selectively completed by a server or a browser on a client terminal, and the unit of the recorded relative coordinates may be "pixel".

In an embodiment, the relative coordinates as the click position of the click operation in the webpage may be recorded in a Nginx server, and the Nginx server may further record an operating time of the click operation together, for use in subsequent data restoration. As the Nginx server occupies less memory and has strong concurrency capability, the Nginx server is particularly suitable as a webpage server herein, so as to store numerous user click position data simultaneously. Definitely, in other embodiments, other types of servers may also be employed to store click position data.

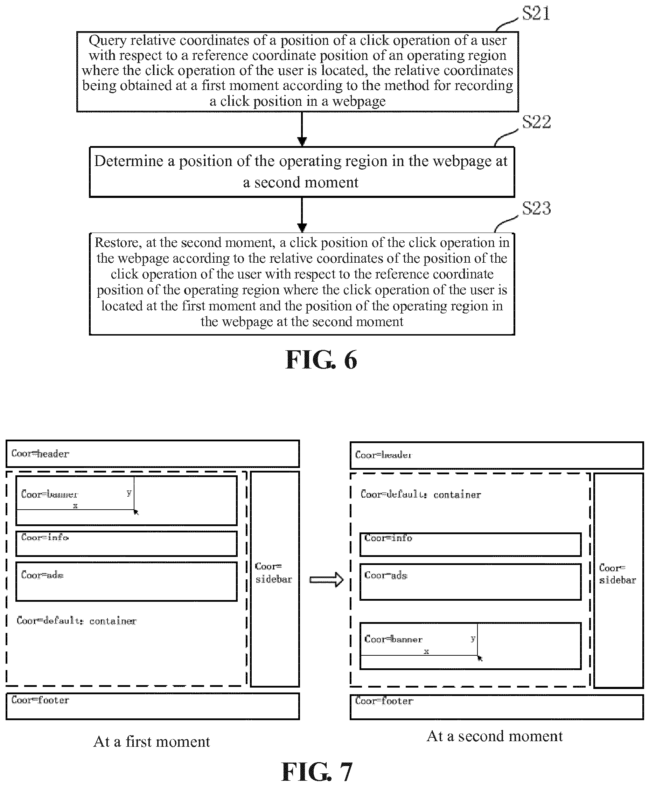

FIG. 6 shows a process of restoring a click position in a webpage according to an embodiment of the present application, which specifically includes the following steps:
S21: Relative coordinates of a position of a click operation of a user with respect to a reference coordinate position of an operating region where the click operation of the user is located is queried, the relative coordinates being obtained at a first moment according to the method for recording a click position in a webpage described above.
S22: A position of the operating region in the webpage at a second moment is determined.

Referring to FIG. 7, the second moment here may refer to any moment, when data of the click position of the user needs to be analyzed, between the first moment and a current moment (including the current moment). The position of the operating region in the webpage may refer to coordinates of the reference coordinate position of the operating region in the webpage. Here, the upper left corner of the banner region is taken as the reference coordinate position [0, 0] of the region, to determine that the position of the banner region in the webpage is [a, b].

S23: A click position of the click operation in the webpage is restored at the second moment according to the relative coordinates of the position of the click operation of the user with respect to the reference coordinate position of the operating region where the click operation of the user is located at the first moment and the position of the operating region in the webpage at the second moment.

Referring to FIG. 7, the above example is continuously used, and suppose that the banner region is a floating region in the webpage. It is obtained through query that the relative coordinates of the position of the click operation of the user with respect to the reference coordinate position of the banner region where the click operation of the user is located is banner: [x, y] at the first moment and that the position of the banner region in the webpage is changed to [a, b] at the second moment. In this case, the click position of the click operation in the webpage at the second moment is determined to be [x+a, y+b]. Here, when restored user click position data is used for data analysis at the second moment, although the position of the banner region deviates, with respect to the banner region per se, the click position data therein still has a reference significance and can reflect click behaviors of the user in the region at least to some extent. For other operating regions whose positions do not change, as the operating regions all have corresponding reference coordinate positions, click position data in the respective regions can be restored precisely.

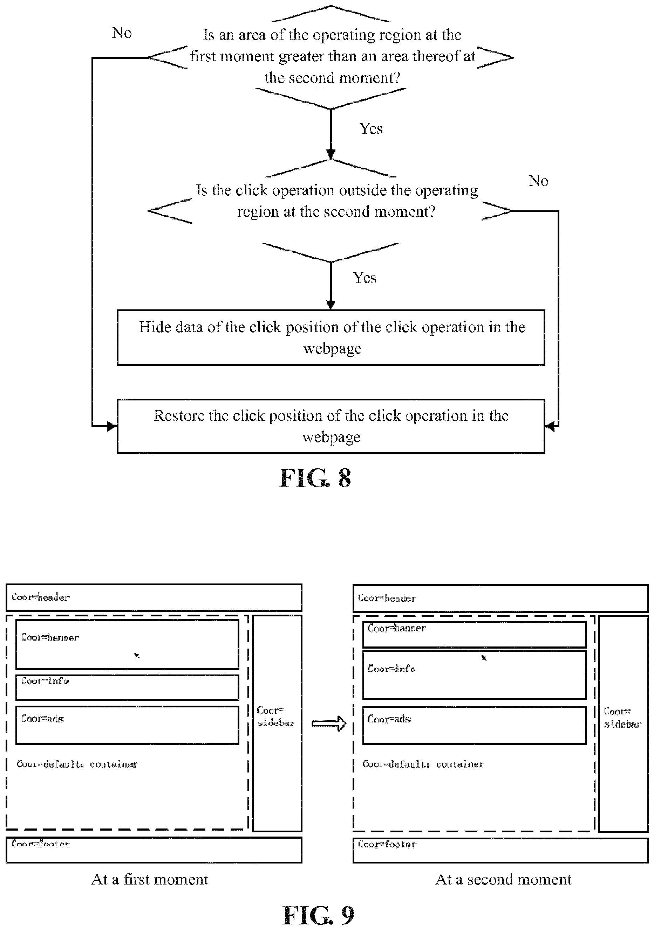

Referring to FIG. 8 and FIG. 9, when the click position in the webpage is restored, it may be further judged whether an area of the operating region where the click operation is located at the first moment is greater than an area thereof at the second moment; if no, it indicates that the click operation is still located in the operating region at the second moment, and the operation of determining a click position is performed normally; if yes, it is further judged whether the click operation is outside the operating region at the second moment; if no, the operation of determining a click position is performed normally; and if yes, the server may hide data of the click position of the click operation in the webpage for this restoration process. In the embodiment shown in FIG. 8, the click operation is located outside the banner region at the second moment, and as the area of the info region changes, the click operation fails into the info region. In this case, hiding click position data of the click operation, on one hand, eliminates data having no reference significance, and on the other hand, avoids interference of the click position data with data in the info region.

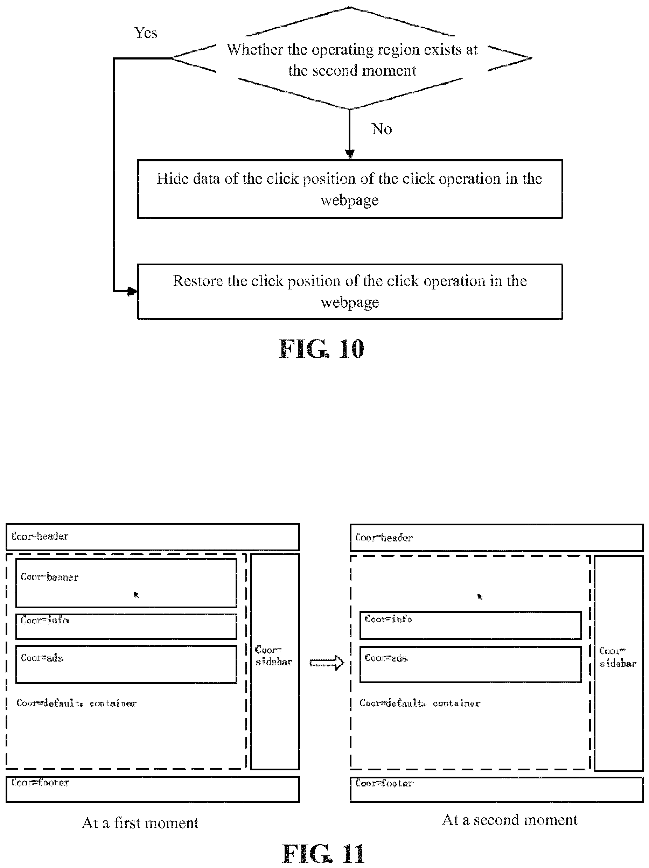

Referring to FIG. 10 and FIG. 11, when the click position in the webpage is restored, it may be further judged whether the operating region where the click operation is located exists at the second moment; if yes, the operation of determining a click position is performed normally; and if no, the server may hide data of the click position of the click operation in the webpage for this restoration process. In the embodiment shown in FIG. 10, the banner region where the click operation is located at the first moment does not exist at the second moment, and in this case, hiding the click position data of the click operation can ensure validity of the click position data used during data analysis.

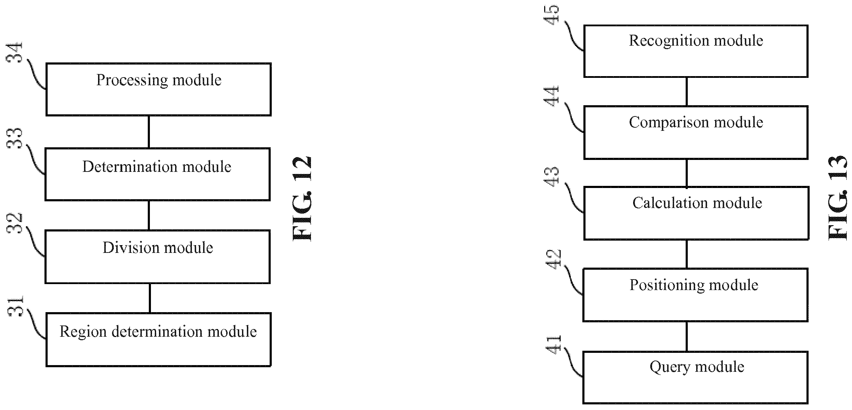

FIG. 12 is a schematic diagram of modules of an apparatus for recording a click position in a webpage according to this embodiment, which specifically includes:
a region determination module 31 configured to determine a reference region in a webpage in which a click position is to be recorded;
a division module 32 configured to divide the reference region into several operating regions according to a frame structure and a style of the webpage, and determine a region other than the reference region in the webpage as an operating region, wherein coordinate positions of webpage elements in the operating region are fixed in the operating region, and the operating region has at least one reference coordinate position;
a determination module 33 configured to determine a current operating region where a click operation of a user is located; and a processing module 34 configured to, by taking a reference coordinate position of the current operating region where the click operation is located as a reference, calculate relative coordinates of the position of the click operation with respect to the reference coordinate position, and record the relative coordinates as a click position of the click operation in the webpage.

In this embodiment, the region determination module 31 is specifically configured to conduct statistics on historical operation behaviors of the user in the webpage, and determine a region in which the number of the historical operation behaviors of the user exceeds a preset threshold in the webpage as a reference region, and the division module 32 is specifically configured to divide the reference region into several operating regions according to the frame structure and the style of the webpage and historical operation behaviors of the user in the reference region in the webpage.

In this embodiment, the reference coordinate position of the operating region determined from the region other than the reference region in the webpage is selected from any reference coordinate position in the several operating regions into which the reference region is divided.

In this embodiment, the several operating regions into which the reference region is divided include: a header region, and/or a banner region, and/or an info region, and/or an ads region, and/or a footer region, and/or a sidebar region.

In this embodiment, the processing module 34 is specifically configured to record the click position of the click operation in the webpage in a Nginx server; and the processing module is further configured to record an operating time of the click operation by using the Nginx server.

It should be noted that the apparatus for recording a click position in a webpage in this embodiment may be configured on a server or on a client terminal, or the region determination module 31, the division module 32, and the determination module 33 in the apparatus are configured on a browser of a client terminal, and the processing module 34 is configured on a server.

FIG. 13 is a schematic diagram of modules of an apparatus for restoring a click position in a webpage according to this embodiment, the webpage being divided into several operating regions, wherein the apparatus includes:
a query module 41 configured to query relative coordinates of a position of a click operation of a user with respect to a reference coordinate position of an operating region where the click operation of the user is located, the relative coordinates being obtained at a first moment according to the apparatus for recording a click position in a webpage described above;
a positioning module 42 configured to determine a position of the operating region in the webpage at a second moment, the second moment being after the first moment; and
a calculation module 43 configured to restore, at the second moment, a click position of the click operation in the webpage according to the relative coordinates of the position of the click operation of the user with respect to the reference coordinate position of the operating region where the click operation of the user is located at the first moment and the position of the operating region in the webpage at the second moment.

In this embodiment, the apparatus for restoring a click position in a webpage further includes a comparison module 44 configured to judge whether an area of the operating region at the first moment is greater than an area thereof at the second moment; if yes, judge whether the click operation is outside the operating region at the second moment; and if yes, hide data of the click position of the click operation in the webpage.

In this embodiment, the apparatus for restoring a click position in a webpage further includes a recognition module 45 configured to judge whether the operating region exists at the second moment; and if no, hide data of the click position of the click operation in the webpage.

In specific applications that use the method and the apparatus for recording and restoring a click position in a webpage, statistics, analysis and display of overall popularity conditions of the operating regions divided can be conducted; or when an A/B test is performed for a same webpage, webpages with A and B design schemes are randomly delivered to a target user, to analyze user click behavior data for the A and B schemes, thereby optimizing the webpage pertinently and improving a target webpage index.

It should be noted that the apparatus for restoring a click position in a webpage in this embodiment may be configured on a server or on a client terminal, or the positioning module 42 in the apparatus is configured on a browser of a client terminal, and the query module 41 and the calculation module 43 are configured on a server.

The embodiments of the present application provide a method and an apparatus for recording and restoring a click position in a webpage. In the recording method, a reference region in a webpage in which a click position is to be recorded is determined, the reference region is divided into several operating regions according to a frame structure and a style of the webpage, a region other than the reference region in the webpage is divided as one operating region, and at least one reference coordinate position is determined for each operating region. After a user performs a click operation in the webpage, a current operating region where the click operation is located may be determined, and then by taking a reference coordinate position of the current operating region as a reference, relative coordinates of the position of the click operation with respect to the reference coordinate position are calculated and taken as a click position of the click operation in the webpage. As each operating region has its own reference coordinate position, when some operating regions dynamically change, click position data of other operating regions would not be affected. For an operating region that dynamically changes, click position data therein still has a reference significance with respect to the operating region, thereby ensuring validity of recorded click position data and accuracy of later data analysis.

Those skilled in the art should understand that, the embodiments of the present invention may be provided as a method, a system, or a computer program product. Therefore, the present invention may be implemented in the form of a complete hardware embodiment, a complete software embodiment, or an embodiment combining software and hardware. Moreover, the present invention may be in the form of a computer program product implemented on one or more computer usable storage media (including, but not limited to, a magnetic disk memory, a CD-ROM, an optical memory, and the like) including computer usable program code.

The present invention is described with reference to flowcharts and/or block diagrams according to the method, the device (system) and the computer program product of the embodiments of the present invention. It should be understood that a computer program instruction may be used to implement each process and/or block in the flowcharts and/or block diagrams and combinations of processes and/or blocks in the flowcharts and/or block diagrams. The computer program instructions may be provided to a universal computer, a dedicated computer, an embedded processor or a processor of another programmable data processing device to generate a machine, such that the computer or the processor of another programmable data processing device executes an instruction to generate an apparatus configured to implement functions designated in one or more processes in a flowchart and/or one or more blocks in a block diagram.

The computer program instructions may also be stored in a computer readable storage that can guide the computer or another programmable data processing device to work in a specific manner, such that the instruction stored in the computer readable storage generates an article of manufacture including an instruction apparatus, and the instruction apparatus implements functions designated by one or more processes in a flowchart and/or one or more blocks in a block diagram.

The computer program instructions may also be installed in the computer or another programmable data processing device, such that a series of operation steps are executed on the computer or another programmable device to generate a computer implemented processing, and therefore, the instruction executed in the computer or another programmable device provides steps for implementing functions designated in one or more processes in a flowchart and/or one or more blocks in a block diagram.

In a typical configuration, the computer device includes one or more processors (CPU), an input/output interface, a network interface, and a memory.

The memory may include a volatile memory, a random access memory (RAM) and/or a non-volatile memory or the like in a computer readable medium, for example, a read-only memory (ROM) or a flash RAM. The memory is an example of the computer readable medium.

The computer readable medium includes non-volatile and volatile media as well as movable and non-movable media, and can implement information storage by means of any method or technology. Information may be a computer readable instruction, a data structure, and a module of a program or other data. A storage medium of a computer includes, for example, but is not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessible to the computing device. According to the definition herein, the computer readable medium does not include transitory media, such as modulated data signals and carriers.

It should be further noted that, the terms "include", "comprise" or other variations thereof are intended to cover non-exclusive inclusion, so that a process, method, commodity or device including a series of elements not only includes the elements, but also includes other elements not clearly listed, or further includes inherent elements of the process, method, commodity or device. In the absence of more limitations, an element defined by the expression "including a/an..." does not exclude that the process, method, commodity or device including the element further has other identical elements.

Those skilled in the art should understand that, the embodiments of the present application may be provided as a method, a system, or a computer program product. Therefore, the present application may be implemented in the form of a complete hardware embodiment, a complete software embodiment, or an embodiment combining software and hardware. Moreover, the present application may be in the form of a computer program product implemented on one or more computer usable storage media (including, but not limited to, a magnetic disk memory, a CD-ROM, an optical memory, and the like) including computer usable program code.

The above descriptions are merely embodiments of the present application, but are not intended to limit the present application. For those skilled in the art, the present application may have various modifications and changes. Any modification, equivalent replacement, improvement and the like made within the spirit and principle of the present application should be encompassed in the scope of the claims of the present application.

## Claims

1. A method for recording a click position in a webpage, comprising:
determining a reference region in a webpage in which a click position is to be recorded;
dividing the reference region into several operating regions according to a frame structure and a style of the webpage, and determining a region other than the reference region in the webpage as an operating region, wherein coordinate positions of webpage elements in the operating region are fixed in the operating region, and the operating region has at least one reference coordinate position;
determining a current operating region where a click operation of a user is located; and
by taking a reference coordinate position of the current operating region where the click operation is located as a reference, calculating relative coordinates of the position of the click operation with respect to the reference coordinate position, and recording the relative coordinates as a click position of the click operation in the webpage.

2. The method of claim 1, wherein the step of determining a reference region in a webpage in which a click position is to be recorded, and dividing the reference region into several operating regions according to a frame structure and a style of the webpage specifically comprises:
conducting statistics on historical operation behaviors of the user in the webpage;
determining a region in which the number of the historical operation behaviors of the user exceeds a preset threshold in the webpage as a reference region; and
dividing the reference region into several operating regions according to the frame structure and the style of the webpage and historical operation behaviors of the user in the reference region in the webpage.

3. The method of claim 2, wherein the reference coordinate position of the operating region determined from the region other than the reference region in the webpage is selected from any reference coordinate position in the several operating regions into which the reference region is divided.

4. The method of claim 2, wherein the several operating regions into which the reference region is divided comprise: a header region, and/or a banner region, and/or an info region, and/or an ads region, and/or a footer region, and/or a sidebar region.

5. The method of claim 1, wherein the click position of the click operation in the webpage is recorded in a Nginx server; and the method further comprises:
recording an operating time of the click operation by using the Nginx server.

6. A method for restoring a click position in a webpage, the webpage being divided into several operating regions, wherein the method comprises:
querying relative coordinates of a position of a click operation of a user with respect to a reference coordinate position of an operating region where the click operation of the user is located, the relative coordinates being obtained at a first moment according to the method for recording a click position in a webpage of any of claims 1 to 5;
determining a position of the operating region in the webpage at a second moment, the second moment being after the first moment; and
restoring, at the second moment, a click position of the click operation in the webpage according to the relative coordinates of the position of the click operation of the user with respect to the reference coordinate position of the operating region where the click operation of the user is located at the first moment and the position of the operating region in the webpage at the second moment.

7. The method of claim 6, wherein the method further comprises:
judging whether an area of the operating region at the first moment is greater than an area thereof at the second moment;
if yes, judging whether the click operation is outside the operating region at the second moment; and
if yes, hiding data of the click position of the click operation in the webpage.

8. The method of claim 6, wherein the method further comprises:
judging whether the operating region exists at the second moment; and
if no, hiding data of the click position of the click operation in the webpage.

9. An apparatus for recording a click position in a webpage, comprising:
a region determination module configured to determine a reference region in a webpage in which a click position is to be recorded;
a division module configured to divide the reference region into several operating regions according to a frame structure and a style of the webpage, and determine a region other than the reference region in the webpage as an operating region, wherein coordinate positions of webpage elements in the operating region are fixed in the operating region, and the operating region has at least one reference coordinate position;
a determination module configured to determine a current operating region where a click operation of a user is located; and
a processing module configured to, by taking a reference coordinate position of the current operating region where the click operation is located as a reference, calculate relative coordinates of the position of the click operation with respect to the reference coordinate position, and record the relative coordinates as a click position of the click operation in the webpage.

10. The apparatus for recording a click position in a webpage of claim 9, wherein the region determination module is specifically configured to conduct statistics on historical operation behaviors of the user in the webpage, and determine a region in which the number of the historical operation behaviors of the user exceeds a preset threshold in the webpage as a reference region, and the division module is specifically configured to divide the reference region into several operating regions according to the frame structure and the style of the webpage and historical operation behaviors of the user in the reference region in the webpage.

11. The apparatus for recording a click position in a webpage of claim 10, wherein the reference coordinate position of the operating region determined from the region other than the reference region in the webpage is selected from any reference coordinate position in the several operating regions into which the reference region is divided.

12. The apparatus for recording a click position in a webpage of claim 10, wherein the several operating regions into which the reference region is divided comprise: a header region, and/or a banner region, and/or an info region, and/or an ads region, and/or a footer region, and/or a sidebar region.

13. The apparatus for recording a click position in a webpage of claim 9, wherein the processing module is specifically configured to record the click position of the click operation in the webpage in a Nginx server; and the processing module is further configured to record an operating time of the click operation by using the Nginx server.

14. An apparatus for restoring a click position in a webpage, the webpage being divided into several operating regions, wherein the apparatus comprises:
a query module configured to query relative coordinates of a position of a click operation of a user with respect to a reference coordinate position of an operating region where the click operation of the user is located, the relative coordinates being obtained at a first moment according to the apparatus for recording a click position in a webpage of any of claims 9 to 13;
a positioning module configured to determine a position of the operating region in the webpage at a second moment, the second moment being after the first moment; and
a calculation module configured to restore, at the second moment, a click position of the click operation in the webpage according to the relative coordinates of the position of the click operation of the user with respect to the reference coordinate position of the operating region where the click operation of the user is located at the first moment and the position of the operating region in the webpage at the second moment.

15. The apparatus for restoring a click position in a webpage of claim 14, wherein the apparatus for restoring a click position in a webpage further comprises a comparison module configured to judge whether an area of the operating region at the first moment is greater than an area thereof at the second moment; if yes, judge whether the click operation is outside the operating region at the second moment; and if yes, hide data of the click position of the click operation in the webpage.

16. The apparatus for restoring a click position in a webpage of claim 14, wherein the apparatus for restoring a click position in a webpage further comprises a recognition module configured to judge whether the operating region exists at the second moment; and if no, hide data of the click position of the click operation in the webpage.
